(19) Europäisches Patentamt
European Patent Office
Office européen des brevets

(11) **EP 2 728 136 A1**

(12) **EUROPEAN PATENT APPLICATION**

(43) Date of publication:
**07.05.2014 Bulletin 2014/19**

(21) Application number: **13191156.2**

(22) Date of filing: **31.10.2013**

(51) Int Cl.:
*F01N 11/00* (2006.01)          *F01N 3/20* (2006.01)
*B01D 53/94* (2006.01)          *F01N 13/00* (2010.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.11.2012 US 201261722123 P
16.07.2013 US 201313943474**

(71) Applicant: **International Engine Intellectual
Property Company, LLC
Lisle, Illinois 60532 (US)**

(72) Inventors:
• **Singh, Navtej
Arlington Heigts, IL Illinois 60004 (US)**
• **Charintranond, Paul Boon
Elmhurst, IL Illinois 60126 (US)**
• **Miller, Michael James
Mt. Prospect, IL Illinois 60056 (US)**

(74) Representative: **Kuhnen & Wacker
Patent- und Rechtsanwaltsbüro
Prinz-Ludwig-Straße 40A
85354 Freising (DE)**

(54) **Ammonia slip detection**

(57)    A method of detecting ammonia in the exhaust system includes detecting a predetermined engine operating condition. Upon detecting the predetermined operating condition, the method determines a first $NO_x$ conversion efficiency of a catalyst at a first time T1. The method then injects a reactant into the exhaust upstream of the catalyst and determines a second $NO_x$ conversion efficiency at a second time T2. The method then processes the first and second $NO_x$ conversion efficiencies to determine whether an ammonia slip condition exists.

**FIG. 1**

## Description

BACKGROUND

Selective catalytic reduction (SCR) is commonly used to remove NO_X *(i.e.,* oxides of nitrogen) from the exhaust gas produced by internal engines, such as diesel or other lean bum (gasoline) engines. In such systems, NO_X is continuously removed from the exhaust gas by injection of a reductant into the exhaust gas prior to entering an SCR catalyst capable of achieving a high conversion of NO_X.

Ammonia is often used as the reductant in SCR systems. The ammonia is introduced into the exhaust gas by controlled injection either of gaseous ammonia, aqueous ammonia or indirectly as urea dissolved in water. The SCR catalyst, which is positioned in the exhaust gas stream, causes a reaction between NO_X present in the exhaust gas and a NO_X reducing agent (*e.g.,* ammonia) to convert the NO_X into nitrogen and water.

Proper operation of the SCR system involves precise control of the amount (*i.e.,* dosing level) of ammonia (or other reductant) that is injected into the exhaust gas stream. If too little reductant is used, the catalyst will convert an insufficient amount of NO_X. If too much reductant is used, a portion of the ammonia will pass unreacted through the catalyst in a condition known as "ammonia slip." Thus, it is desirable to be able to detect the occurrence of "ammonia slip" conditions in order to, among other things, regulate dosing levels.

SUMMARY

Aspects and embodiments of the present technology described herein relate to one or more systems and methods for detecting ammonia slip across a catalyst in the exhaust system of an internal combustion engine. According to at least one aspect of the present technology, a method of detecting ammonia in the exhaust system of an internal combustion engine includes detecting a predetermined engine operating condition. Upon detecting the predetermined operating condition, the method determines a first NO_X conversion efficiency of the catalyst at a first time T1. The method then injects a reactant into the exhaust upstream of the catalyst and determines a second NO_X conversion efficiency at a second time T2. The method then processes the first and second NO_X conversion efficiencies to determine whether an ammonia slip condition exists. In particular, the method may include determining that an ammonia slip condition exists when the second NO_X conversion efficiency is greater than the first NO_X conversion efficiency. According to some embodiments, the reductant is ammonia. In some embodiments, the preselected engine operating condition may be a steady state condition. In some embodiments, the steady state condition may correspond to a condition where engine speed or load is constant.

In some embodiments, the method may determine the first NO_X conversion efficiency by detecting a first upstream NO_X level relative to the catalyst at the first time and detecting a first downstream NO_X level relative to the catalyst at the first time. Likewise, the method may determine the second NO_X conversion efficiency by detecting a second upstream NO_X level relative to the catalyst at the second time and detecting a second downstream NO_X level relative to the catalyst at the second time. In at least some embodiments, the method may determine NO_X conversion efficiency in accordance with the following formula:

$$Eff = \frac{NO_{x\text{-upstream}} - NO_{x\text{-downstream}}}{NO_{x\text{-upstream}}} \cdot 100$$

where Eff is NO_X conversion efficiency, $NO_{x\text{-upstream}}$ is the upstream NO_X level and $NO_{x\text{-downstream}}$ is the downstream NO_X level.

Certain aspects of the present technology relate to a system for detecting ammonia in an exhaust system of an internal combustion engine. The exhaust system including an SCR catalyst and an injector upstream of the catalyst for injecting a reductant into the exhaust system. An upstream NO_X sensor is positioned to detect the level of NO_X in the exhaust stream at a location upstream of the catalyst and produce a responsive upstream NO_X signal. A downstream NO_X sensor is positioned to detect the level of NO_X in the exhaust stream at a location downstream of the catalyst and produce a responsive downstream NO_X signal. A controller is configured to receive the upstream and downstream NO_X signals; detect a preselected engine operating condition; determine a first NO_X conversion efficiency based on the upstream and downstream NO_X at a first time T1; signal the injector to inject reductant into the exhaust system; determine a second NO_X conversion efficiency based on the upstream and downstream NO_X levels at a second time T2 following injection of the reductant; and process the first and second NO_X conversion efficiencies to determine whether an ammonia slip condition exists. In at least some embodiments, the reductant may be ammonia. In some embodiments, the preselected engine operating condition comprises a steady state operating condition. In some embodiments, the controller may determine $NO_x$ conversion efficiency in accordance with the following formula:

$$Eff = \frac{NO_{x\text{-upstream}} - NO_{x\text{-downstream}}}{NO_{x\text{-upstream}}} \cdot 100$$

where Eff is the $NO_x$ conversion efficiency, $NO_{x\text{-upstream}}$ is the upstream $NO_x$ level and $NO_{x\text{-downstream}}$ is the downstream $NO_x$ level. The system may be configured to identify an ammonia slip condition in response to the second $NO_x$ conversion efficiency being greater than the first $NO_x$ conversion efficiency.

BRIEF DESCRIPTION OF THE DRAWINGS

FIG. 1 is a schematic illustration of an internal combustion engine with an exhaust gas SCR system.
FIG. 2 is a graph illustrating an exemplary relationship between $NO_x$ conversion and $NO_x$ storage by a catalyst.
FIG. 3 is a graph illustrating an exemplary relationship between $NO_x$ conversion and $NO_x$ storage by a catalyst.
FIG. 4 is a flow chart of an exemplary method for detecting ammonia slip in an engine exhaust system according to certain embodiments of the present technology.

DETAILED DESCRIPTION

Various examples of embodiments of the present technology will be described more fully hereinafter with reference to the accompanying drawings, in which such examples of embodiments are shown. Like reference numbers refer to like elements throughout. Other embodiments of the presently described technology may, however, be in many different forms and are not limited solely to the embodiments set forth herein. Rather, these embodiments are examples representative of the present technology. Rights based on this disclosure have the full scope indicated by the claims.

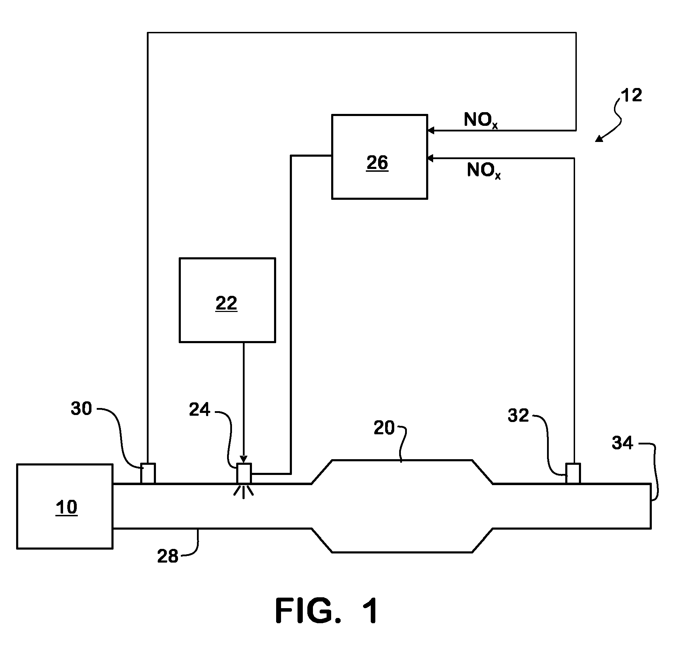

Fig. 1 shows an exemplary schematic depiction of an internal combustion engine 10 and an SCR system 12 for reducing $NO_x$ from the engine's exhaust. The engine 10 can be used, for example, to power a vehicle such as an over-the-road vehicle (not shown). The engine 10 can be a compression ignition engine, such as a diesel engine, for example. Generally speaking, the SCR system 12 includes a catalyst 20, a reductant supply 22, a reductant injector 24, an electronic control unit ("ECU") 26, an upstream $NO_x$ detector 30 and a downstream $NO_x$ detector 32.
The ECU 26 controls delivery of a reductant, such as ammonia, from the reductant supply 22 and into an exhaust system 28 through the reductant injector 24. The reductant supply 22 can include canisters (not shown) for storing ammonia in solid form. In most systems, a plurality of canisters will be used to provide greater travel distance between recharging. A heating jacket (not shown) is typically used around the canister to bring the solid ammonia to a sublimation temperature. Once converted to a gas, the ammonia is directed to the reductant injector 24. The reductant injector 24 is positioned in the exhaust system 28 upstream from the catalyst 20. As the ammonia is injected into the exhaust system 28, it mixes with the exhaust gas and this mixture flows through the catalyst 20. The catalyst 20 causes a reaction between $NO_x$ present in the exhaust gas and a $NO_x$ reducing agent (e.g., ammonia) to reduce/convert the $NO_x$ into nitrogen and water, which then passes out of the tailpipe 34 and into the environment. While the SCR system 12 has been described in the context of solid ammonia, it will be appreciated that the SCR system 12 could alternatively use a reductant such as pure anhydrous ammonia, aqueous ammonia or urea, for example.
The upstream $NO_x$ sensor 30 is positioned to detect the level of $NO_x$ in the exhaust stream at a location upstream of the catalyst 20 and produce a responsive upstream $NO_x$ signal. As shown in FIG. 1, the upstream $NO_x$ sensor 30 may be positioned in the exhaust system 28 between the engine and the injector 24. The downstream $NO_x$ sensor 32 may be positioned to detect the level of $NO_x$ in the exhaust stream at a location downstream of the catalyst 20 and produce a responsive downstream $NO_x$ signal. The ECU 26 is connected to receive the upstream and downstream $NO_x$ signals from the sensors 30 and 32. The ECU 26 may be configured to control reductant dosing from the injector 24 in response to the upstream and/or downstream $NO_x$ signals (and other sensed parameters). The present technology is not limited to any particular dosing strategy. Accordingly, the particulars of the dosing strategy are not detailed herein.
In addition to controlling the dosing or metering of ammonia, the ECU 26 can also store information such as the amount of ammonia being delivered, the canister providing the ammonia, the starting volume of deliverable ammonia in the canister, and other such data which may be relevant to determining the amount of deliverable ammonia in each canister. The information may be monitored on a periodic or continuous basis. When the ECU 26 determines that the amount of deliverable ammonia is below a predetermined level, a status indicator (not shown) electronically connected to the controller 26 can be activated.

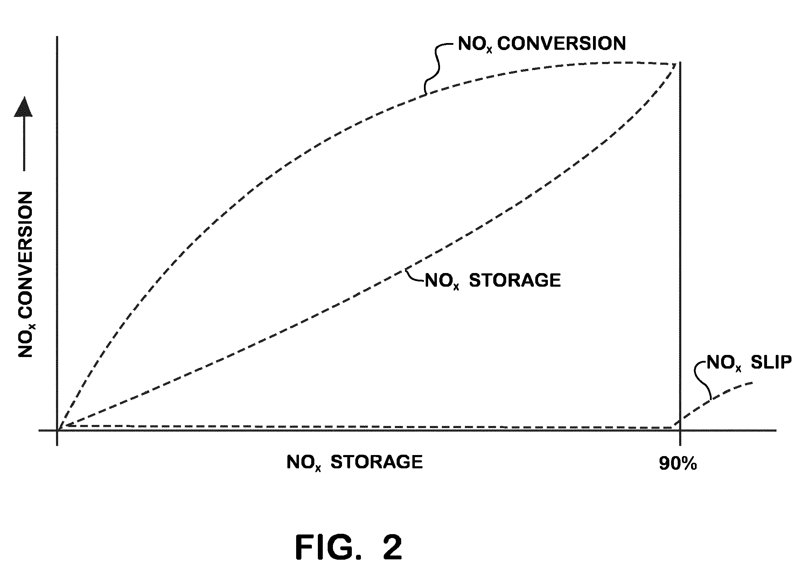

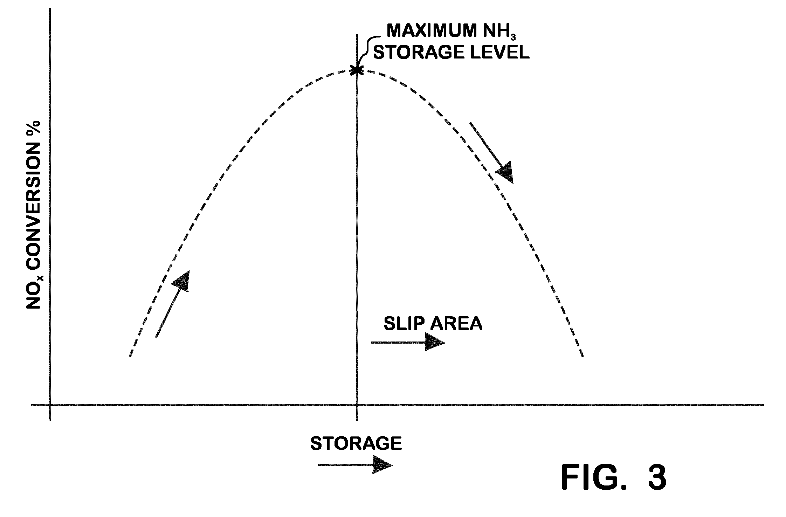

FIGs. 2 and 3 are graphs illustrating exemplary relationships between $NO_x$ conversion and $NO_x$ storage by a catalyst, where $NO_x$ storage represents the percentage of storage capacity of the catalyst that is being used. The $NO_x$ conversion efficiency of a catalyst is generally a function of stored $NO_3$, temperature and space velocity. As can be seen in FIGS. 2 and 3, $NO_x$ conversion generally increases as $NO_x$ storage increases. However, when the catalyst reaches a certain capacity, e.g., 90% in the illustrated embodiment, its efficiency stops increasing. As a result, the catalyst will stop converting all of the ammonia and some of the ammonia will pass ("slip") through the catalyst and into the environment. $NO_x$ sensors are typically cross-sensitive to ammonia. More specifically, $NO_x$ sensors typically cannot discriminate between these two compounds. Accordingly, ammonia that slips through the catalyst will be sensed as $NO_x$ by a downstream $NO_x$. As a result, the ammonia slippage may cause more ammonia to be injected, which will, in turn, compound the slippage problem. Thus, it is desirable to be able to detect the occurrence of "ammonia slip" in order to regulate dosing levels.

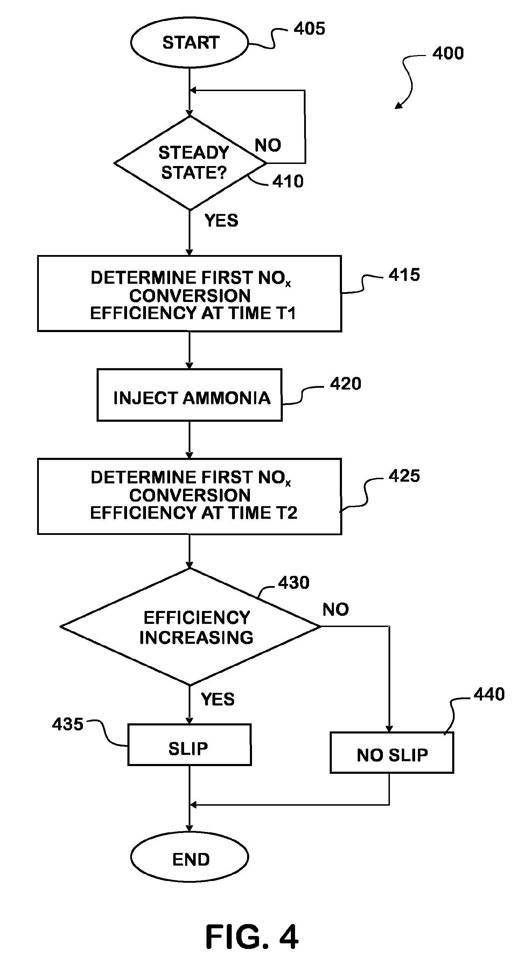

FIG. 4 is a flow chart of an exemplary method 400 for detecting ammonia slip in an SCR system according to certain aspects of the present technology. The method 400 begins in step 405. Control is then passed to the step 410 where the method checks to see if the engine is in a preselected engine operating condition. In at least some embodiments, the preselected engine operating condition may be a "steady state" operating condition where the $NO_x$ produced by the engine is substantially constant. For example, a steady state operating condition may correspond to a condition where a vehicle is motoring, e.g., engine speed or load is substantially constant. The method continues to loop through step 410 until the preselected operating condition is detected.

Once the condition is detected, control is passed to step 415, where the method 400 determines a first $NO_x$ efficiency at a first time T1. In particular, the method determines the upstream $NO_x$ level, e.g., by reading the upstream $NO_x$ signal from the upstream $NO_x$ sensor 30 and a downstream $NO_x$ level, e.g., by reading the downstream $NO_x$ signal from the downstream $NO_x$ sensor 32. The method 400 then uses the upstream and downstream $NO_x$ values to determine the $NO_x$ efficiency in accordance with the following formula:

$$Eff = \frac{NO_{x\text{-upstream}} - NO_{x\text{-downstream}}}{NO_{x\text{-upstream}}} \cdot 100$$

where Eff is $NO_x$ conversion efficiency, $NO_{x\text{-upstream}}$ is the upstream $NO_x$ level and $NO_{x\text{-downstream}}$ is the downstream $NO_x$ level.

Control is then passed to step 420, where the method 400 injects a test dose of reductant, e.g., ammonia, into the exhaust system upstream of the catalyst 20. For example, the method 400 may involve having the ECU 26 actuate the injector 24 to inject a predetermined amount of reductant into the exhaust system 28.

Control is then passed to the step 425, where the method determines a second $NO_x$ conversion efficiency at a second time T2. As above, the method 400 may determine $NO_x$ conversion efficiency by reading the signals from the upstream and downstream $NO_x$ sensors 30, 32 at the second time and calculating $NO_x$ conversion efficiency based on these values.

Control is then passed to step 430, where the method 400 processes the first and second $NO_x$ conversion efficiency values to determine if an ammonia slip condition exists. Specifically, the method compares the first and second $NO_x$ conversion efficiency values to see if the $NO_x$ efficiency increases following injection of the test dose in step 420. If the $NO_x$ conversion efficiency value increased, control is passed to step 435, where the method indicates that an ammonia slip condition may exist. Conversely, if the $NO_x$ conversion efficiency value did not increase, control is passed to step 440, where the method indicates that an ammonia slip condition does not exist. Specifically, since the engine is operating in a steady state condition where $NO_x$ production is substantially constant, the $NO_x$ reading from the upstream $NO_x$ sensor 30 will remain substantially constant between the first and second times T1, T2. If the ammonia dose, which is injected downstream of the sensor 32, is not fully converted by the catalyst 20, it will be sensed by the downstream $NO_x$ sensor 32. Accordingly, when ammonia slip occurs, the second $NO_x$ conversion efficiency value will be higher than the first $NO_x$ conversion efficiency.

In sum, the method 400 initially checks to see if the engine 10 is operating in a steady state condition where the $NO_x$ produced by the engine is substantially constant. Upon detecting a steady state condition, the method 400 determines a first $NO_x$ conversion efficiency of the catalyst at a first time T1. The method 400 then injects a dose of reactant into the exhaust upstream of the catalyst 20 and determines a second $NO_x$ conversion efficiency at a second time T2. The method 400 then determines if the $NO_x$ conversion efficiency has increased between the first and second times. An increasing $NO_x$ conversion efficiency indicates the presence of an ammonia slip condition.

At least some embodiments of the present technology relate to a system 12 for detecting an ammonia slip across an SCR catalyst in the exhaust system of an internal combustion engine. Referring again to Fig. 1, the system 12 may generally include the injector 24, the reductant supply 22, the upstream $NO_x$ sensor 30, the downstream $NO_x$ sensor 32 and a controller such as the ECU 26. The ECU 26 may be configured to receive the upstream and downstream $NO_x$ signals and to control operation of the injector 24. The ECU 26 may be configured to detect a preselected operating condition in the engine, such as a steady state operating condition. Upon detecting the steady state operating condition, the ECU 26 determines a first $NO_x$ conversion efficiency at a first time T1. The ECU 26 then signals the injector 24 to inject a dose of reductant into the exhaust system 28. The ECU 26 then determines a second $NO_x$ conversion efficiency based on the upstream and downstream $NO_x$ levels at a second time following injection of the reductant. The ECU 26 then processes the first and second $NO_x$ conversion efficiencies to determine whether an ammonia slip condition exists. In particular, the ECU 26 may be configured to signal that an ammonia slip condition is present when $NO_x$ conversion efficiency increases between the first and second times.

While this disclosure has been described as having exemplary embodiments, this application is intended to cover any variations, uses, or adaptations using the general principles set forth herein. It is envisioned that those skilled in the art may devise various modifications and equivalents without departing from the spirit and scope of the disclosure as recited in the following claims. Further, this application is intended to cover such departures from the present disclosure as come within the known or customary practice within the art to which it pertains.

## Claims

1. A method of detecting ammonia slip across a catalyst in an exhaust system of an internal combustion engine comprising;
   detecting a preselected operating condition of the engine;
   determining a first $NO_x$ conversion efficiency of the catalyst at a first time; injecting a reductant into the exhaust upstream of the catalyst;
   thereafter detecting a second $NO_x$ conversion efficiency of the catalyst at a second time; and
   processing the first and second $NO_x$ conversion efficiencies to determine whether an ammonia slip condition exists.

2. The method of claim 1, wherein the reductant comprises ammonia.

3. The method of claim 1, wherein the preselected engine operating condition comprises a steady state condition.

4. The method of claim 1, wherein the step of determining a first $NO_x$ conversion efficiency of the catalyst at a first time further comprises:

   detecting a first upstream $NO_x$ level relative to the catalyst at the first time;
   and
   detecting a first downstream $NO_x$ level relative to the catalyst at the first time.

5. The method of claim 1, wherein the step of determining a second $NO_x$ conversion efficiency of the catalyst at a second time further comprises:

   detecting a second upstream $NO_x$ level relative to the catalyst at the second time; and
   detecting a second downstream $NO_x$ level relative to the catalyst at the second time.

6. The method of claim 1, wherein $NO_x$ conversion efficiency is determined in accordance with the following formula:

$$Eff = \frac{NO_{x\text{-upstream}} - NO_{x\text{-downstream}}}{NO_{x\text{-upstream}}} \cdot 100$$

   where Eff is $NO_x$ conversion efficiency, $NO_{x\text{-upstream}}$ is the upstream $NO_x$ level and $NO_{x\text{-downstream}}$ is the downstream $NO_x$ level.

7. The method of claim 1, further comprising signaling an ammonia slip condition in response to the $NO_x$ conversion efficiency increasing between the first and second times.

8. A method of detecting ammonia slip across a catalyst in an exhaust system of an internal combustion engine comprising:

detecting a preselected operating condition of the engine;
thereafter detecting a first upstream $NO_x$ level relative to the catalyst at a first time;
detecting a first downstream $NO_x$ level relative to the catalyst at a first time;
injecting a reductant into the exhaust upstream of the catalyst;
thereafter detecting a second upstream $NO_x$ level relative to the catalyst at a second time;
detecting a second downstream $NO_x$ level relative to the catalyst at a second time; and
determining a first $NO_x$ conversion efficiency based on the first upstream and first downstream $NO_x$ levels;
determining second $NO_x$ conversion efficiency based on the second upstream and second downstream $NO_x$ levels; and
processing the first and second $NO_x$ conversion efficiencies to determine whether an ammonia slip condition exists.

9. The method of claim 8, wherein $NO_x$ conversion efficiency is determined in accordance with the following formula:

$$Eff = \frac{NO_{x\text{-upstream}} - NO_{x\text{-downstream}}}{NO_{x\text{-upstream}}} \cdot 100$$

where Eff is $NO_x$ conversion efficiency, $NO_{x\text{-upstream}}$ is the upstream $NO_x$ level and $NO_{x\text{-downstream}}$ is the downstream $NO_x$ level.

10. The method of claim 9, wherein the reductant comprises ammonia.

11. The method of claim 10, wherein the preselected engine operating condition comprises a steady state condition.

12. A system for detecting ammonia in an exhaust system of an internal combustion engine, the exhaust system including a catalyst and an injector upstream of the catalyst for injecting a reductant into the exhaust system, the system comprising:

an upstream $NO_x$ sensor positioned to detect the level of $NO_x$ in the exhaust stream at a location upstream of the catalyst and produce a responsive upstream $NO_x$ signal;
a downstream $NO_x$ sensor positioned to detect the level of $NO_x$ in the exhaust stream at a location downstream of the catalyst and produce a responsive downstream $NO_x$ signal;
a controller configured to receive the upstream and downstream $NO_x$ signals;
detect a preselected engine operating condition; determine a first $NO_x$ conversion efficiency based on the upstream and downstream $NO_x$ levels at a first time; signal the injector to inject reductant into the exhaust system; determine a second $NO_x$ conversion efficiency based on the upstream and downstream $NO_x$ levels at a second time following injection of the reluctant; and process the first and second $NO_x$ conversion efficiencies to determine whether an ammonia slip condition exists.

13. The system of claim 12, wherein the preselected engine operating condition comprises a steady state operating condition.

14. The method of claim 12, wherein $NO_x$ conversion efficiency is determined in accordance with the following formula:

$$Eff = \frac{NO_{x\text{-upstream}} - NO_{x\text{-downstream}}}{NO_{x\text{-upstream}}} \cdot 100$$

where Eff is $NO_x$ conversion efficiency, $NO_{x\text{-upstream}}$ is the upstream $NO_x$ level and $NO_{x\text{-downstream}}$ is the downstream $NO_x$ level.

**15.** The method of claim 12, wherein the reductant comprises ammonia.

**FIG. 1**

FIG. 2

EP 2 728 136 A1

FIG. 3

**FIG. 4**

EP 2 728 136 A1

Europäisches
Patentamt

European
Patent Office

Office européen
des brevets

# EUROPEAN SEARCH REPORT

Application Number

EP 13 19 1156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2011 114700 A1 (GM GLOBAL TECH OPERATIONS INC [US]) 12 April 2012 (2012-04-12) * claims 1,9; figures 3,4 * * page 6, paragraph 35-37 * | 1-15 | INV. F01N11/00 F01N3/20 B01D53/94 F01N13/00 |
| X | WO 2010/096793 A2 (CUMMINS EMISSION SOLUTIONS [US]; CLERC JIM C [US]; WHITE TIMOTHY M [US) 26 August 2010 (2010-08-26) * claim 1; figures 1,2 * * page 12, line 16 - page 13, line 5 * | 1-15 | |
| X | US 2003/182935 A1 (KAWAI KENJI [JP] ET AL) 2 October 2003 (2003-10-02) * claims 1,3; figures 1,2,8,9 * * page 1, paragraphs 10,13 * * page 3, paragraph 42 * | 1-15 | |
| X | US 2010/028228 A1 (GADY KEVIN ANDREW [US] ET AL) 4 February 2010 (2010-02-04) * claims 1,14; figure 2 * * page 4, paragraph 61-66 * | 12-15 | |
| X | US 2011/005209 A1 (GADY KEVIN ANDREW [US] ET AL) 13 January 2011 (2011-01-13) * page 2, paragraphs 29,30; claims 1,9; figures 1-3 * | 12-15 | TECHNICAL FIELDS SEARCHED (IPC) F01N B01D |
| X | US 2010/223908 A1 (SOLBRIG CHARLES E [US] ET AL) 9 September 2010 (2010-09-09) * claims 1,11,12; figures 1-3 * | 12-15 | |

The present search report has been drawn up for all claims

| Place of search | Date of completion of the search | Examiner |
|---|---|---|
| Munich | 20 January 2014 | Harf, Julien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 13 19 1156

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2014

| Patent document cited in search report | Publication date | Patent family member(s) | | Publication date |
|---|---|---|---|---|
| DE 102011114700 A1 | 12-04-2012 | NONE | | |
| WO 2010096793 A2 | 26-08-2010 | NONE | | |
| US 2003182935 A1 | 02-10-2003 | CN | 1448620 A | 15-10-2003 |
| | | DE | 60203781 D1 | 25-05-2005 |
| | | DE | 60203781 T2 | 29-09-2005 |
| | | EP | 1348477 A1 | 01-10-2003 |
| | | JP | 3951774 B2 | 01-08-2007 |
| | | JP | 2003293737 A | 15-10-2003 |
| | | US | 2003182935 A1 | 02-10-2003 |
| US 2010028228 A1 | 04-02-2010 | CN | 101637702 A | 03-02-2010 |
| | | DE | 102009034622 A1 | 12-05-2010 |
| | | US | 2010028228 A1 | 04-02-2010 |
| US 2011005209 A1 | 13-01-2011 | CN | 101949319 A | 19-01-2011 |
| | | DE | 102010026317 A1 | 10-03-2011 |
| | | US | 2011005209 A1 | 13-01-2011 |
| US 2010223908 A1 | 09-09-2010 | CN | 101832166 A | 15-09-2010 |
| | | DE | 102010009042 A1 | 21-10-2010 |
| | | US | 2010223908 A1 | 09-09-2010 |

EPO FORM P0459

For more details about this annex : see Official Journal of the European Patent Office, No. 12/82